# EUROPÄISCHE PATENTSCHRIFT

(11) **EP 1 494 842 B1**
(45) Veröffentlichungstag und Bekanntmachung des Hinweises auf die Patenterteilung: **06.06.2007**
(21) Anmeldenummer: 02747285.1
(22) Anmeldetag: 17.04.2002
(51) Int. Cl.: B29C 45/12

(54) **VORRICHTUNG ZUM SPRITZGIESSEN VON FORMKÖRPERN AUS KUNSTSTOFF**
DEVICE FOR THE INJECTION MOULDING OF MOULDED BODIES MADE FROM PLASTIC
DISPOSITIF POUR MOULER PAR INJECTION DES CORPS MOULES EN MATIERE PLASTIQUE

(43) Veröffentlichungstag der Anmeldung: 12.01.2005
(73) Patentinhaber: Werner, Monika, 32108 Bad Salzuflen (DE)
(72) Erfinder: JAROSCHEK, Christoph, 33619 Bielefeld (DE)
(74) Vertreter: Döring, Roger
(86) Internationale Anmeldenummer: PCT/EP2002/004227
(87) Internationale Veröffentlichungsnummer: WO 2003/086729

(56) Entgegenhaltungen:
- EP-A- 0 103 363
- US-A- 2 209 141
- US-A- 4 400 341
- US-A- 4 539 171
- US-A- 6 089 852
- PATENT ABSTRACTS OF JAPAN vol. 005, no. 158 (M-091), 12. Oktober 1981 (1981-10-12) & JP 56 086730 A (MITSUBISHI MONSANTO CHEM CO), 14. Juli 1981 (1981-07-14)
- JAROSCHEK C: "DOPPELTE LEISTUNG TANDEMWERKZEUGE FUER STANDARDMASCHINEN" KUNSTSTOFFE, CARL HANSER VERLAG. MUNCHEN, DE, Bd. 92, Nr. 8, August 2002 (2002-08), Seiten 53-55, XP001124883 ISSN: 0023-5563

## Beschreibung

Die Erfindung bezieht sich auf eine Vorrichtung zum Spritzgießen von Formkörpern aus Kunststoff gemäß dem Oberbegriff des Patentanspruchs 1 (US-A-4539171).

Spritzgießmaschinen werden zum Herstellen von Formkörpern mit nahezu beliebiger Formgebung eingesetzt. In dem zugehörigen Werkzeug müssen nur Kavitäten vorhanden sein, in welche geschmolzener Kunststoff eingespritzt werden kann. Die durch eine Trennebene getrennten Teile des Werkzeugs werden in Arbeitsposition beispielsweise hydraulisch fest zusammengedrückt. Nach dem Einspritzen des Kunststoffs in die Kavitäten des Werkzeugs bleibt dasselbe in herkömmlicher Technik noch so lange geschlossen, bis die in den Kavitäten befindlichen Formkörper ausreichend abgekühlt und dadurch so fest geworden sind, daß sie aus dem Werkzeug entnommen werden können. Dazu wird das Werkzeug in der Trennebene geöffnet, wobei seine Teile voneinander entfernt werden. Während der Zeit, in welcher der Kunststoff der Formkörper in den Kavitäten abkühlt, wird die Spritzgießmaschine nicht genutzt. Dieser Nachteil ist besonders gravierend, wenn relativ dickwandige Formkörper mit langer Abkühlzeit hergestellt werden sollen.

Die Leistung einer Spritzgießmaschine läßt sich steigern, wenn ein in Tandemtechnik arbeitendes Werkzeug gemäß der DE-Zeitschrift "Kunststoffe 84" (1994) 10. Seiten 1375 bis 1382 eingesetzt wird. Bei einer mit einem solchen Werkzeug arbeitenden Spritzgießmaschine öffnen sich die Teile abwechselnd in zwei Trennebenen. Während der Kühlzeit der Formkörper der einen Trennebene, können die Formkörper aus der zweiten Trennebene entformt werden. Diese Arbeitsweise ist vorteilhaft für Formkörper mit einer Kühlzeit, die länger ist als die für das Füllen der Kavitäten benötigte Dosierzeit.

In Tandemtechnik arbeitende Spritzgießmaschinen sind aufwendige Spezialmaschinen, Sie benötigen eine in mittlerer Position angebrachte bewegliche Mittelplatte, an welche die Spritzgießeinheit seitlich angeschlossen wird. Der aufgeschmolzene Kunststoff wird über in der Mittelplatte angeordnete Kanäle in die jeweiligen Kavitäten eingespritzt. Diese bekannte Tandemtechnik läßt sich bei herkömmlichen Spritzgießmaschinen nicht oder nur nach umfangreichen Umbauten einsetzen.

Bei der Vorrichtung nach der eingangs erwähnten US-A-4539171 wird eine spezielle, an ein anzuschließendes Werkzeug angepaßte Spritzgießmaschine eingesetzt, die mindestens einen abgewinkelten Führungskanal für das Spritzmaterial hat. Die Vorrichtung weist ein aus drei Teilen bestehendes Werkzeug auf, bei dem jeweils zwischen zwei der Teile eine Trennebene vorhanden ist. Die beiden Trennebenen des Werkzeugs werden zum Entformen fertiger Teile wechselweise geöffnet. Die Vorrichtung hat außerdem zwei voneinander getrennte Kanäle zur Führung des Spritzmaterials im Werkzeug. Die Kanäle haben einen gleichbleibenden Querschnitt und werden beheizt, damit das Spritzmaterial dieselben während der Abkühlungsphasen nicht verstopft. Dazu verlaufen die Kanäle in den Teilen des Werkzeugs weit außen liegend. Eine Verriegelung der Teile des Werkzeugs ist in der Schrift mit den Worten "hydraulic means" und "magnetic means" erwähnt. Ihre Wirkungsweise ist nicht erläutert.

Der Erfindung liegt die Aufgabe zugrunde, die eingangs geschilderte Vorrichtung so zu gestalten, daß auch bei Einsatz herkömmlicher Spritzgießmaschinen der Ausstoß fertiger Formkörper auf einfache Weise erhöht werden kann.

Diese Aufgabe wird entsprechend den kennzeichnenden Merkmalen des Patentanspruchs 1 gelöst.

Diese Vorrichtung ist ohne Umbau und besondere Zusatzmaßnahmen für herkömmliche, handelsübliche Spritzgießmaschinen einsetzbar. Es braucht nur ein bisher verwendetes Einfachwerkzeug mit nur zwei durch eine Trennebene getrennten Teilen durch das neue, aus drei Teilen mit zwei Trennebenen bestehende Werkzeug ersetzt zu werden. Ähnlich wie bei der geschilderten Tandemtechnik wird mit diesem Werkzeug der Ausstoß an Formteilen erhöht, wobei während der Entformung im Bereich der einen Trennebene der in die Kavitäten der anderen Trennebene eingespritzte Kunststoff abkühlt. Von wesentlicher Bedeutung für diese Vorrichtung ist die für die Teile des Werkzeugs während der jeweiligen Abkühlungsphase verwendete Verriegelung. Sie ist auf einfache Weise zwischen zwei Positionen verstellbar. Während durch die Verriegelung jeweils zwei Teile des Werkzeugs beim Abkühlen der Formteile unter Erhalt einer dieselben fest zusammenhaltenden Restkraft untereinander verriegelt sind, kann gleichzeitig die Trennebene zum dritten Teil zur Entformung von fertigen Formkörpern geöffnet werden. Nach dem folgenden Verschließen dieser Trennebene und dem Einspritzen von Kunststoff in deren Kavitäten wird die Verriegelung bei noch fest verschlossenen Werkzeug in ihre zweite Position gebracht. Die beiden Teile des Werkzeugs mit den neu gefüllten Kavitäten bleiben dann dicht aneinander liegend miteinander verriegelt, während jetzt die vorher verriegelte Trennebene zum Entformen der inzwischen abgekühlten Formkörper geöffnet werden kann, sobald die auf das Werkzeug während des Spritzvorgangs einwirkende Anpreßkraft aufgehoben ist.

Ausführungsbeispiele des Erfindungsgegenstandes sind in den Zeichnungen dargestellt.

Es zeigen:
Fig. 1 die Vorrichtung nach der Erfindung in schematischer Darstellung teilweise im Schnitt in der Schließstellung.
Fig. 2 und 3 zwei unterschiedliche Offenstellungen der Vorrichtung nach Fig. 1.
Fig. 4 und 5 eine Ausführungsform einer bei der Vorrichtung einsetzbaren Verriegelung in zwei unterschiedlichen Positionen.
Fig. 6 eine gegenüber den Fig. 4 und 5 andere Ausführungsform der Verriegelung.

In den Zeichnungen sind nur die für das Verständnis der Erfindung erforderlichen Teile einer Spritzgießvorrichtung dargestellt. Grundsätzlich bekannte Elemente derselben, wie beispielsweise der Öffnungs- und Schließmechanismus oder Kühlkanäle oder Heizeinrichtungen, sind nicht gezeigt.

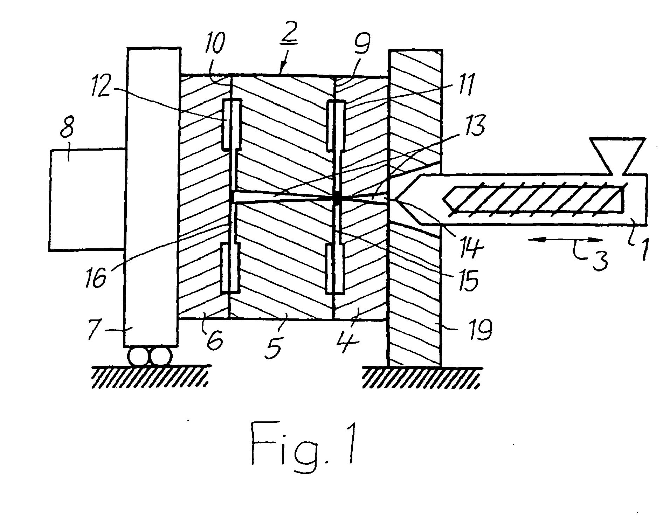

Die Erfindung ist für Vorrichtungen mit "Kaltkanal" einsetzbar. Sie wird im folgenden anhand der Fig. 1 bis 6 ausführlich für die Ausführungsform mit Kaltkanal erläutert.

Die Spritzgießvorrichtung nach Fig. 1 besteht aus einer Spritzgießmaschine 1 und einem an dieselbe anschließbaren Werkzeug 2. Die Spritzgießmaschine 1 kann eine herkömmliche, handelsübliche Maschine ohne jede Sonderausstattung sein. Sie ist in Richtung des Doppelpfeils 3 verschiebbar.

Das Werkzeug 2 besteht aus drei Teilen, einem vorderen Teil 4, einem mittleren Teil 5 und einem hinteren Teil 6. Es ist am hinteren Teil 6 mit einer Druckplatte 7 abgeschlossen, die mit einem Druckerzeuger 8 verbunden ist. Als Druckerzeuger 8 kann beispielsweise eine pneumatische oder hydraulische Presse eingesetzt werden. Die drei relativ zueinandes bewegbaren Teile 4, 5 und 6 des Werkzeugs 2 sind in Arbeitsstellung, durch zwei rechtwinklig zu ihrer Bewegungsrichtung und parallel zueinander verlaufende Trennebenen 9 und 10 voneinander getrennt. In jeder Trennebene 9 und 10 ist mindestens eine Kavität 11 bzw. 12 des Werkzeugs 2 vorhanden, deren lichte Abmessungen der geometrischen Gestalt von herzustellenden Formkörpern entsprechen. Im dargestellten Ausführungsbeispiel sind pro Trennebene 9 bzw. 10 zwei Kavitäten 11 bzw. 12 eingezeichnet.

Zentral im Werkzeug 2 ist ein Kanal 13 angebracht, welcher zum Zuführen von geschmolzenem Kunststoff zu den Kavitäten 11 und 12 dient. Der Kanal 13 beginnt an einer an einer Oberfläche des Werkzeugs 2 liegenden, nach außen offenen Eintrittstelle 14. Er erstreckt sich zunächst im Teil 4 des Werkzeugs 2 bis zur Trennebene 9 und dann weiterführend im mittleren Teil 5 des Werkzeugs 2 bis zur Trennebene 10. Damit das als Anguß bezeichnete Material des Kunststoffs nach dem Abkühlen und Entformen der Formkörper aus dem Kanal 13 einfach entfernt werden kann, ist derselbe entsprechend der zeichnerischen Darstellung in beiden Abschnitten konisch ausgebildet. Vom Kanal 13 gehen Teilkanäle 15 bzw. 16 aus, die zu den Kavitäten 1 1 bzw. 12 führen. Die Teilkanäle 15 und 16 liegen vorzugsweise in den Trennebenen 9 und 10.

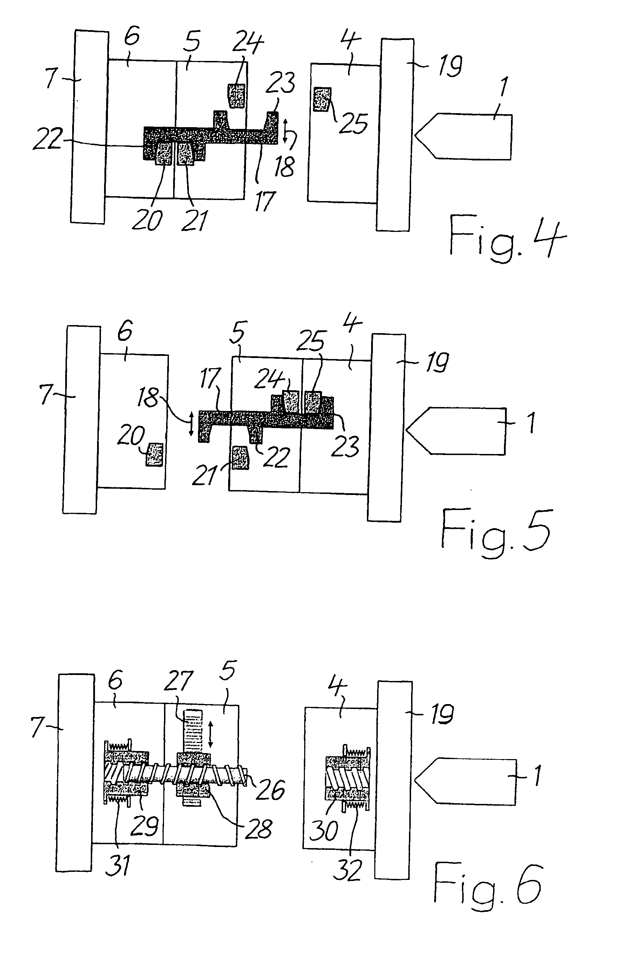

Außen am Werkzeug 2 ist eine beispielsweise aus den Fig. 4 und 5 hervorgehende Verriegelung mit einem Riegel 1 7 angebracht, der entsprechend dem Doppelpfeil 18 zwischen zwei Positionen verstellbar ist. In der in Fig. 4 dargestellten Position des Riegels 17 sind die Teile 5 und 6 des Werkzeugs 2 miteinander verriegelt, während in seiner zweiten Position gemäß Fig. 5 die Teile 5 und 4 des Werkzeugs 2 miteinander verriegelt sind. Der genauere Aufbau von für die Vorrichtung verwendbaren Verriegelungen wird weiter unten anhand der Fig. 4 bis 6 beschrieben.

Die Vorrichtung nach Fig. 1 arbeitet beispielsweise wie folgt:

Es sei angenommen, daß der vordere Teil 4 des Werkzeugs 2 mit einer ihn begrenzenden Halteplatte 19 fest steht. Zur Erzeugung von Formkörpern in den Kavitäten 11 und 12 wird die Spritzgießmaschine 1 bis an die Eintrittstelle 14 des Kanals 13 an das Werkzeug 2 herangefahren. In der Spritzgießmaschine 1 vorhandener, aufgeschmolzener Kunststoff kann dann in den Kanal 13 eingepreßt werden. Er füllt über den Kanal 13 sowie die Teilkanäle 15 und 16 die Kavitäten 11 und 12. Wenn die Kavitäten 11 und 12 unter Anwendung eines ausreichenden Drucks gefüllt sind, wird die Spritzgießmaschine 1 geschlossen. Der im Werkzeug 2 vorhandene Kunststoff kühlt dann ab.

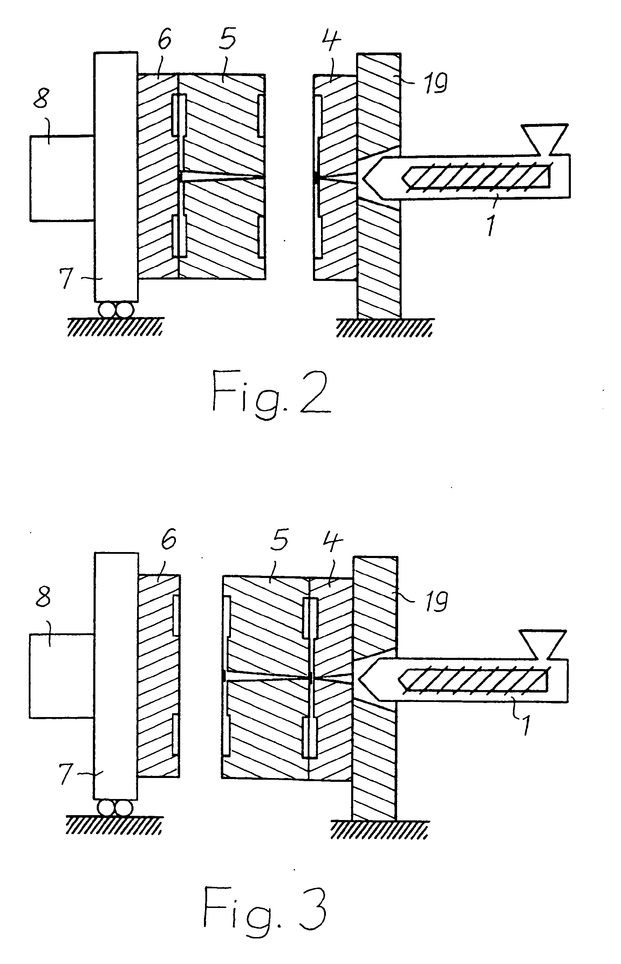

Nach ausreichender Kühlzeit werden die Spritzgießmaschine 1 vom Werkzeug 2 weggezogen und das Werkzeug 2 in der Trennebene 9 geöffnet. Seine Teile 5 und 6 sind dabei miteinander verriegelt. Sie können nach Abschaltung der vom Druckerzeuger 8 erzeugten Anpreßkraft gemeinsam mit der beweglich gelagerten Druckplatte 7 in die aus Fig. 2 ersichtliche Position gebracht werden. Die Verriegelung ist dabei mit Vorteil so ausgeführt, daß nach Fortfall der Anpreßkraft des Druckerzeugers 8 eine die beiden Teile des Werkzeugs 2 zusammenhaltende Restkraft erhalten bleibt. Die in den Kavitäten 11 erzeugten Formkörper können jetzt aus dem Werkzeug 2 entnommen werden. Der im Kanal 13 im Teil 4 des Werkzeugs 2 verbliebene Anguß des Kunststoffs wird beispielsweise mittels Druckluft entfernt, so daß dieser Teil des Kanals 13 wieder frei ist.

Danach wird das Werkzeug 2 wieder in seine aus Fig. 1 ersichtliche Schließ- bzw. Arbeitsstellung gebracht, in welcher die Teile 4, 5 und 6 des Werkzeugs 2 durch den Druckerzeuger 8 fest zusammengedrückt werden. Die Spritzgießmaschine 1 wird wieder an das Werkzeug 2 herangefahren und die Kavitäten 11 werden wieder mit Kunststoff gefüllt. Anschließend wird die Verriegelung in ihre zweite Position gebracht, in welcher die Teile 5 und 4 des Werkzeugs 2 so wie oben beschrieben miteinander verriegelt sind. Das Werkzeug 2 wird dann in der Trennebene 10 geöffnet, wobei nur der hintere Teil 6 desselben mit der Druckplatte 7 bis in die aus Fig. 3 ersichtliche Position bewegt wird. Die fertigen Formkörper der Kavitäten 12 und der im Kanal 13 im mittleren Teil 5 des Werkzeugs 2 verbliebene Anguß können entnommen werden. Während dieser Zeit kühlt der Kunststoff in den Kavitäten 11 der Trennebene 9 ab.

Das Werkzeug 2 wird dann wie schon beschrieben wieder in seine Schließ- bzw. Arbeitsstellung gemäß Fig. 1 gebracht. Der Anguß in dem im Teil 4 befindlichen Teil des Kanals 13 wird beispielsweise wieder durch den Einsatz von Druckluft entfernt. Die Spritzgießmaschine 1 wird erneut bis an das Werkzeug 2 herangefahren. Die Kavitäten 12 werden wieder mit Kunststoff gefüllt und die Teile 5 und 6 werden miteinander verriegelt. Inzwischen sind die Formkörper in den Kavitäten 11 abgekühlt, so daß das Werkzeug 2 - wie weiter oben beschrieben - in der Trennebene 9 geöffnet werden kann. Auf diese Weise werden ständig abwechselnd die Kavitäten 11 und 12 mit Kunststoff gefüllt und nach Abkühlung entformt.

Für das Abkühlen des Kunststoffs in den Kavitäten 11 und 12 ist es erforderlich, daß die zugehörigen beiden Teile des Werkzeugs 2 nach Fortfall der vom Druckerzeuger 8 aufgebrachten Anpreßkraft verriegelt bleiben. Dazu kann eine eine Restkraft erhaltende Verriegelung verwendet werden, die mindestens auf einer Seite der Vorrichtung, mit Vorteil aber auf mindestens zwei unterschiedlichen Seiten derselben, vorhanden ist. Es kann beispielsweise eine Verriegelung gemäß den Fig. 4 und 5 eingesetzt werden. Sie besteht aus dem Riegel 17, der am mittleren Teil 5 des Werkzeugs 2 geführt ist und in Richtung des Doppelpfeils 18 verschoben werden kann. In der Position von Fig. 4 sind der mittlere Teil 5 und der hintere Teil 6 des Werkstücks 2 miteinander verriegelt. An den beiden Teilen 5 und 6 sind dazu konische Vorsprünge 20 und 21 angebracht, um die eine entsprechende Gabel 22 des Riegels 17 herumgreift. Die am anderen Ende des Riegels 17 angebrachte Gabel 23 ist in dieser Position außer Funktion. Sie umgreift in der zweiten Position des Riegels 17 die Vorsprünge 24 und 25, welche am mittleren Teil 5 und am vorderen Teil 4 des Werkzeugs 2 angebracht sind. Dazu braucht der Riegel 17 bei geschlossenem Werkzeug nur "nach oben" in die aus Fig. 5 ersichtliche Position geschoben zu werden. Der hintere Teil 6 des Werkzeugs 2 kann dann zur Öffnung der Trennebene 10 bewegt werden.

Statt eines zwischen zwei Positionen zu verschiebenden Riegels 17 gemäß den Fig. 4 und 5 könnte auch ein entsprechend gestalteter, in zwei Positionen zu kippender Riegel verwendet werden. Als Elemente einer Verriegelung könnten auch Elektromagnete eingesetzt werden, die abwechselnd den vorderen Teil 4 oder den hinteren Teil 6 mit dem mittleren Teil 5 des Werkzeugs 2 fest verbinden (verriegeln).

Zum Verriegeln der Teile 4, 5 und 6 des Werkzeugs 2 in der anhand der Fig. 4 und 5 beschriebenen Art und Weise kann gemäß Fig. 6 auch eine Gewindestange 26 mit Trapezgewinde verwendet werden, die durch einen Antrieb 27 über eine Buchse 28 gedreht werden kann. Sie wird dadurch entweder in eine Aufnahme 29 des hinteren Teils 6 des Werkzeugs 2 (Fig. 6) oder in eine Aufnahme 30 des vorderen Teils 4 desselben gedreht. Zur Sicherung einer ausreichenden Anpreßkraft (Restkraft) in der jeweiligen Verriegelungsstellung können die Aufnahmen 29 und 30 durch Federn 31 bzw. 32 beaufschlagt sein. Statt der Gewindestange 26 könnte mit entsprechend angepaßten Verstellelementen auch eine Zahnstange eingesetzt werden.

## Patentansprüche

1. Vorrichtung zum Spritzgießen von Formkörpern aus Kunststoff, bestehend aus einer Spritzgießmaschine (1) und aus einem zu derselben gehörenden Werkzeug (2), bei welcher in dem Werkzeug mindestens zwei den Abmessungen von herzustellenden Formkörpern entsprechende Kavitäten (11, 12) vorhanden sind, bei welcher das Werkzeug aus mindestens drei relativ zueinander bewegbaren Teilen besteht, einem vorderen Teil (4), einem mittleren Teil (5) und einem hinteren Teil (6), die in Arbeitsstellung entlang von durch die Kavitäten führenden, rechtwinklig zur Bewegungsrichtung der Teile und parallel zueinander verlaufenden Trennebenen (9, 10) unter Einwirkung einer von einem Druckerzeuger (8) erzeugten Anpreßkraft fest aneinander liegen, wobei jede Trennebene durch mindestens je eine Kavität verläuft, und bei welcher im Werkzeug ein Kanal (13) zum Zuführen von geschmolzenem Kunststoff angebracht ist, der einerseits in den Kavitäten und andererseits an einer Eintrittsstelle an der Oberfläche des Werkzeugs endet, die in Arbeitsstellung an die Spritzgießmaschine angeschlossen ist, **dadurch gekennzeichnet,**
- **daß** zum Einsatz einer herkömmlichen, handelsüblichen Spritzgießmaschine (1) zentral im vorderen Teil (4) des Werkzeugs (2) ein von der Eintrittsstelle (14) bis zu einer ersten Trennebene (9) und im mittleren Teil (5) des Werkzeugs (2) weiterführend bis zu der zweiten Trennebene (10) reichender Kanal (13) angebracht ist, der sowohl im vorderen Teil (4) des Werkzeugs (2) als auch in dessen mittlerem Teil (5) konisch ausgeführt ist und von dem bis zu den Kavitäten (11,12) reichende Teilkanäle (15,16) ausgehen, und
- **daß** an den Teilen (4,5,6) des Werkzeugs (2) eine zwischen zwei Positionen verstellbare Verriegelung angebracht ist, durch welche bei Fortfall der vom Druckerzeuger (8) erzeugten Anpreßkraft in einer ersten Position nur der mittlere Teil (5) und der die Eintrittsstelle (14) des Kanals (13) aufweisende vordere Teil (4) des Werkzeugs (2) und in einer zweiten Position nur der mittlere Teil (5) und der hintere Teil (6) des Werkzeugs (2) unter Erhalt einer dieselben fest zusammenhaltenden Restkraft miteinander verriegelbar sind, wobei eine Verstellung der Verriegelung von einer Position in die andere jeweils bei nacht fest verschlossenem Werkzeug erfolgen kann.

2. Vorrichtung nach Anspruch 1, **dadurch gekennzeichnet, daß** die Teilkanäle (15,16) in den Trennebenen (9,10) liegen.

3. Vorrichtung nach Anspruch 1 oder 2, **dadurch gekennzeichnet, daß** die Verriegelung durch Verschieben eines Riegels (17) verstellbar ist.

4. Vorrichtung nach Anspruch 1 oder 2, **dadurch gekennzeichnet, daß** die Verriegelung durch Drehung einer Gewindestange (26) verstellbar ist.

5. Vorrichtung nach Anspruch 1 oder 2, **dadurch gekennzeichnet, daß** die Verriegelung durch eine Zahnstange verstellbar ist.

6. Vorrichtung nach Anspruch 1 oder 2, **dadurch gekennzeichnet, daß** die Verriegelung durch Kippen eines Riegels verstellbar ist.

7. Vorrichtung nach Anspruch 1 oder 2, **dadurch gekennzeichnet, daß** die Verriegelung aus Elektromagneten besteht.

## Claims

1. A device for the injection molding of parts made of plastic, comprising an injection molding machine (1) and a tool (2) dedicated thereto, where said tool contains at least two cavities (11,12) that correspond to the dimensions of the molded parts to be produced, where the tool comprises at least three parts which are moveable relative to each other, a front part (4), a central part (5) and a rear part (6), and which in the operating position are firmly pressed against each other along separation planes (9,10) that pass through the cavities and are parallel to each other and at right angles to the moving direction of the parts by the pressure force of a pressure generator (8), where each separation plane runs through at least one cavity, and where the tool contains one channel (13) for supplying molten plastic, which on the one hand ends in the cavities and on the other on the surface of the tool which in the operating position is connected to the injection molding machine, **characterized in that**
- for the use of a conventional, customary injection molding machine (1) centrally within the front part (4) of the tool (2) a channel (13) is provided, which extends from the inlet area (14) to a first separation plane (9), and continues to the second separation plane (10) within the central (5) of the tool (2), which is formed conically in the front part (4) of the tool (2) as well as in the central part (5), and where partial channels (15,16) extend from it to the cavities (11, 12), and
- a lock, which can be adjusted in two positions, is located on the parts (4,5,6) of the tool (2), where during discontinuation of the pressure force generated by the pressure generator (8) in a first position only the central part (5) and the front part (4) of the tool (2) that contains the inlet area (14) of the channel (13) are locked together, and in a second position only the central part (5) and the rear part (6) of the tool (2) are firmly locked together, with maintaining of a residual force, where the adjustment of the lock from one position into the other position respectively is possible as long as the tool in closed firmly.

2. A device as claimed in claim 1, **characterized in that** the partial channels (15,16) are located in the separation planes (9,10).

3. A device as claimed in claim 1 or 2, **characterized in that** the lock can be adjusted by sliding a bolt (17).

4. A device as claimed in claim 1 or 2, **characterized in that** the lock can be adjusted by rotating a threaded rod (26).

5. A device as claimed in claim 1 or 2, **characterized in that** the lock can be adjusted by means of a toothed rack.

6. A device as claimed in claim 1 or 2, **characterized in that** the lock can be adjusted by inclining a bolt.

7. A device as claimed in claim 1 or 2, **characterized in that** the lock is composed of electromagnets.

## Revendications

1. Dispositif de moulage par injection de corps moulés en matière synthétique, constitué d'une machine (1) de moulage par injection et d'un outil (2) qui fait partie de cette machine, dans lequel au moins deux cavités (11, 12), dont les dimensions correspondent à celles des corps moulés à fabriquer, sont prévues dans l'outil, dans lequel l'outil est constitué d'au moins trois parties qui peuvent se déplacer les unes par rapport aux autres, à savoir une partie avant (4), une partie centrale (5) et une partie arrière (6) qui, en position de travail, reposent fixement les unes contre les autres sous l'action d'une force de poussée exercée par un dispositif (8) de création de pression le long de plans de séparation (9, 10) qui traversent les cavités, qui sont perpendiculaires à la direction de déplacement des parties et qui s'étendent parallèlement les uns aux autres, chaque plan de séparation passant à chaque fois par au moins une cavité, et dans lequel un canal (13) est ménagé dans l'outil pour amener de la matière synthétique fondue et se termine d'une part dans les cavités et d'autre part à l'emplacement d'entrée situé à la surface de l'outil qui est raccordée à la machine de moulage par injection en position de travail,
**caractérisé en ce que**
- pour pouvoir utiliser une machine (1) habituelle de moulage par injection disponible sur le marché, un canal (13) est ménagé au centre dans la partie avant (4) de l'outil (2) et s'étend depuis l'emplacement d'entrée (14) jusqu'à un premier plan de séparation (9) et dans la partie centrale (5) de l'outil (2) pour se prolonger jusqu'au deuxième plan de séparation (10) et a une configuration conique aussi bien dans la partie avant (4) de l'outil (2) que dans sa partie centrale (5) et duquel des canaux partiels (15, 16) partent pour s'étendre jusqu'aux cavités (11, 12) et
- **en ce qu'**un verrouillage ajustable entre deux positions est installé sur les parties (4, 5, 6) de l'outil (2) et, lorsque la force de poussée produite par le dispositif (8) de création de pression a disparu, peut verrouiller dans une première position uniquement la partie centrale (5) et la partie avant (4) de l'outil (2) présentant l'emplacement d'entrée (14) du canal (13) et dans une deuxième position, ne peut verrouiller que la partie centrale (5) et la partie arrière (6) de l'outil (2) en maintenant une force résiduelle qui les maintient assemblées, un déplacement du verrouillage d'une position jusque dans l'autre pouvant à chaque fois s'effectuer lorsque l'outil est encore solidement fermé.

2. Dispositif selon la revendication 1, **caractérisé en ce que** les canaux partiels (15, 16) sont situés dans les plans de séparation (9, 10).

3. Dispositif selon les revendications 1 ou 2, **caractérisé en ce que** le verrouillage peut être ajusté par déplacement d'un verrou (17).

4. Dispositif selon les revendications 1 ou 2, **caractérisé en ce que** le verrouillage peut être ajusté par rotation d'une tige filetée (26).

5. Dispositif selon les revendications 1 ou 2, **caractérisé en ce que** le verrouillage peut être ajusté par une crémaillère.

6. Dispositif selon les revendications 1 ou 2, **caractérisé en ce que** le verrouillage peut être ajusté par basculement d'un verrou.

7. Dispositif selon les revendications 1 ou 2, **caractérisé en ce que** le verrouillage est constitué d'électroaimants
